(19) Europäisches Patentamt
European Patent Office
Office européen des brevets

(11) Publication number: 0 227 070 A2

(12) # EUROPEAN PATENT APPLICATION

(21) Application number: 86117776.4

(51) Int. Cl.⁴: C09D 3/82

(22) Date of filing: 19.12.86

(30) Priority: 23.12.85 US 812495

(43) Date of publication of application: 01.07.87 Bulletin 87/27

(84) Designated Contracting States: DE FR GB IT NL

(71) Applicant: GENERAL ELECTRIC COMPANY
1 River Road
Schenectady New York 12305(US)

(72) Inventor: Goossens, John Charles
1612 Magnolia Court
Mt. Vernon Indiana 47620(US)

(74) Representative: Sieb, Rolf, Dr. et al
European Patent Attorney c/o General Electric-Deutschland Frauenstrasse 32
D-8000 München 5(DE)

(54) ## Organopolysiloxane Hardcoats for use on acrylic primed thermoplastic substrates.

(57) UV stabilized organopolysiloxane hardcoats derived from compositions having a pH ranging from about 3.8 to about 5.7 weather unexpectedly well upon application to acrylic primed thermoplastic substrates.

EP 0 227 070 A2

# ORGANOPOLYSILOXANE HARDCOATS FOR USE ON ACRYLIC PRIMED THERMOPLASTIC SUBSTRATES

This invention relates to improved hardcoats for use on acrylic primed thermoplastic substrates. More particularly, the present invention relates to UV stabilized organopolysiloxane hardcoats for use on acrylic primed thermoplastic substrates.

## Background

The use of transparent material utilizing thermoplastic resin as a structural component is well known. Products made from many such thermoplastic resins, particularly polycarbonate resin, exhibit such properties as toughness, high transparency, good dimensional stability, excellent creep resistance, excellent thermal stability and the like. While thermoplastic resins, for example polycarbonate resin, are easily fabricated into the desired shape and have excellent physical and chemical properties, their scratch and abrasion resistance is relatively low.

In order to overcome low scratch and abrasion resistance, various known coatings have been recommended for use on non opaque plastics. Such coatings believed to exhibit the best degree of abrasion resistance are comprised of at least one silicone-containing compound. Especially preferred among the silicone containing coatings are those which employ the condensation product of a functional silane, i.e. organopolysiloxane hardcoats.

The principle problem associated with the organopolysiloxane hardcoats is that of adhesion to the thermoplastic substrate. Acrylic primers, both thermoset and thermoplastic have been commonly used with good results as a prime layer to improve adhesion between hardcoats and substrates. However, even with the use of the acrylic primers, adhesion can often be erratic, leading to spot failures in the surface hardcoat. Spot failures result in degradation of, or damage to, the thermoplastic surface surrounding the area of the failure, particularly in abrasive or otherwise hostile conditions. Further, in spite of the good results obtained with the use of the acrylic primer, the long term effects of weathering will eventually result in adhesion failure.

One approach to improve adhesion is the introduction of a UV light absorber in the organopolysiloxane hardcoat. U.S. Pat. No. 4,373,061, assigned to the instant assignee, discloses the use of a silylated hydroxybenzophenone UV light absorber in an organopolysiloxane hardcoat on an unprimed polycarbonate surface. This approach, in broader application, has proven very useful.

U.S. Pat. No. 4,419,405, assigned to the instant assignee, discloses the use of a silylated hydroxybenzophenone UV light absorber in an organopolysiloxane hardcoat applied to a thermoplastic substrate through an acrylic primer. This use of such UV stabilized hardcoats has proven, in practice, to produce thermoplastic articles with excellent weather resistance.

It is an object of this invention to produce thermoplastic articles having improved weather resistance by application of certain UV stabilized organopolysiloxane hardcoats to an acrylic primed thermoplastic substrate.

It is another object of the present invention to increase the effectiveness of certain UV stabilizers in organopolysiloxane hardcoats on acrylic primed thermoplastic substrates.

It is yet another object of this invention to apply a UV stabilized hardcoat to an acrylic primed thermoplastic substrate from a solution maintained in a critical pH range for increased effectiveness of the UV stabilizer.

These and other objects may be accomplished as taught herein.

## Description of the Invention

Briefly, according to the present invention, there are provided improved organopolysiloxane hardcoats on acrylic primed thermoplastic substrates, which hardcoats are derived from a further curable siloxanol composition comprising:

(a) partial condensates of silanols derived from compounds having the general formula:

$R^3_aSiV_{(4-a)}$

wherein $R^3$ is selected from a monovalent hydrocarbon radical or halogenated monovalent hydrocarbon radical, a may be 0, 1, or 2, and V is independently a member of one or more hydrolyzable group;

(b) an effective amount of solvent system to permit proper application of the hardcoat wherein said solvent system and said partially condensed silanols have a pH ranging from about 3.8 to about 5.7; absent component (c); and

(c) an effective amount of an alkoxysilane functionalized aromatic UV absorbing compound of the general formula:

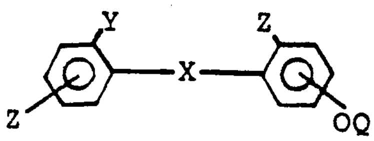

wherein:

X is

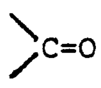 or 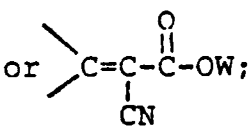

Y is H or OH;

Z is H, OH, OQ or OW, where at least one Z is OH if Y is H;

Q is $-CH_2(CH_2)_nSi(R_2)_x(OR_1)_y$; and

W is $C_mH_{2m+1}$; where x is 0, 1 or 2, y = 1, 2 or 3, x + y = 3, $R_1$ = alkyl or alkanoyl having 1 to 6 carbon atoms, $R_2$-alkyl having 1 to 6 carbon atoms, preferably methyl, n = 0, 1 or 2 and m = 1 to 18.

Suitable thermoplastics for use as the substrate of the present invention include: acrylic and methacrylic polymers or copolymers; acetal copolymers produced by polymerization of trioxane and ethylene oxide; epoxy resins; polyamides; polyimides; poly(ether-imides); polyaryl ethers; polyesters; polyphenylene sulfides; polysulfones; ethylenic polymers such as ethyl vinyl acetates; and necessary compatibilizers.

The preferred thermoplastic substrate for use herein is a polycarbonate sheet. Suitable polycarbonates may be prepared by reacting a dihydric phenol with a carbonate precursor, such as phosgene, a haloformate or a carbonate ester. Typically, these polycarbonates will have recurring structural units of the formula:

$(O\text{-}A\text{-}O\text{-}\overset{O}{\overset{\|}{C}})$

wherein A is a divalent aromatic radical of the dihydric phenol employed in the polymer producing reaction. Preferably, the aromatic carbonate polymers have an intrinsic viscosity ranging from 0.30 to 1.0 dl./g. - (measured in methylene chloride at 25°C.) By dihydric phenols is meant mononuclear or polynuclear aromatic compounds containing two hydroxy radicals, each of which is attached to a carbon atom of an aromatic nucleus. Typical dihydric phenols include 2,2-bis-(4-hydroxyphenol)propane; 2,2-bis-(3,5-dimethyl-4-hydroxyphenyl)propane, 4,4'-dihydroxy-diphenyl ether, bis(2-hydroxyphenyl)methane, mixtures thereof and the like. The preferred aromatic carbonate polymer for use herein is a homopolymer derived from 2,2-bis(4-hydroxyphenyl)propane, i.e, bisphenol-A.

Also preferred for the use as the substrate herein is copolyester-carbonate sheet. The copolyestercarbonates constituting the substrate of the present invention contain recurring carbonate groups:

$\text{-}O\text{-}\overset{O}{\overset{\|}{C}}\text{-}O\text{-}$

and carboxylate groups:

$\text{-}\overset{O}{\overset{\|}{C}}\text{-}O\text{-}$, in the polymer chain. These groups may occur either randomly or as blocks with the number of ester bonds, relative to the number of carbonate bonds, generally being in the range of from about 1/2 to about 6/1. The preferred copolyester-carbonates include the aromatic copolyester-carbonates derived from bisphenol A; phosgene; and isophthalic acid, terephthalic acid, or the reactive derivatives of these acids

such as terephthaloyl dichloride, isophthaloyl dichloride, or mixtures thereof. Preferably, both isophthalic acid and terephthalic acid are employed in the copolyester-carbonate monomer mix. Additional examples of the copolyester-carbonates and methods of their manufacture are disclosed in U.S. Patent Nos. 3,030,331, 3,169,121, 3,207,814, 4,156,069, 4,188,314, and 4,194,038, which are incorporated herein by reference.

The thermosettable and thermoplastic acrylic polymers of the primer coat herein are well known in the art. Exemplary thermosettable or thermoplastic acrylics which may be employed in the practice of this invention are set forth, for example, in Encyclopedia of Polymer Science and Technology, Vol. 1, Interscience Publishers, John Wiley & Sons, Inc., copyright 1964, at page 273 et seq., page 246 et seq., and in Chemistry of Organic Film Formers, by D. H. Solomon, John Wiley & Sons, Inc., 1967 at page 251 et seq. and the references cited therein, all of which are incorporated herein by reference.

Suitable thermosettable acrylic polymers include: (I) acrylic copolymers having reactive functional groups which are capable of reacting between themselves to effect a cross-linkage thereof; (II) acrylic copolymers having reactive functional groups to which there is added an appropriate compatible cross-linking agent which will react with the functional groups to effect cross-linking; and (III) a mixture of two polymers having cross-linkable functional reactive groups.

Typically, the reactions involved in cross-linking the acrylic copolymers are reactions between, for example; epoxide functional groups and carboxyl functional groups; epoxide functional groups and N-methylol or N-methylol-ether functional groups; carboxyl functional groups and N-methylol or N-methylol-ether functional groups; inter-reactions between hydroxyl groups, for example, polyols, and isocyanate groups; and reactions between amine groups and N-methylol or N-methylol-ether functional groups.

The required functional group in the thermosettable acrylic copolymer is provided by employing in the copolymerization a monomer which may be either an acrylic or non-acrylic and supplies the required reactive functional group for cross-linking into the acrylic copolymer chain. Usually, this copolymerizable functional group-supplying acrylic or non-acrylic monomer will be present in lesser amounts, that is, on the order of from about 1 mole percent to about 25 mole percent and typically, between about 3 and 20 mole percent of the monomer which is polymerized. Exemplary of these functional group-supplying acrylic or non-acrylic monomers are glycidyl acrylate, glycidyl methacrylate, allyl glycidyl ether, t-butylaminoethyl-methacrylate, maleic anhydride, itaconic anhydride, allyl alcohol, monoallyl ethers of polyols, hydroxyethyl methacrylate, hydroxypropyl methacrylate, hydroxypropyl acrylate, acrylamide, methacrylamide, maleamide, N-methylolmethacrylamide, vinyl isocyanate, allyl isocyanate.

The predominant group in the thermosettable acrylic copolymer is provided by employing in the copolymerization non-functional acrylic ester monomers. Typically, these non-functional acrylic esters are lower ($C_1$-$C_4$) alkyl acrylic esters or mixtures thereof, e.g., methyl acrylate, ethyl acrylate, methyl methacrylate, and ethyl methacrylate, and preferably, they constitute between about 75 mole percent to about 99 mole percent and, more typically, between about 80 mole percent to about 97 mole percent of the polymerized monomers of the acrylic primer layer.

The thermoplastic acrylic polymers of the instant invention differ from thermosettable acrylic polymers in that the thermoplastic polymers have no functional groups for cross-linking or that the thermoplastic polymers are formed, applied and utilized as primers under conditions such that functional groups, if present, do not react between themselves to effect a cross-linkage between the polymers.

Suitable thermoplastic acrylic polymers are derived from monomers which may be represented by the general formula:

$$CH_2=CY\overset{\overset{O}{\parallel}}{C}OR^5X' \qquad (1)$$

where Y is H or a methyl radical, $R^5$ is a $C_{(1-12)}$alkylene radical, X' is a member selected from hydrogen, hydroxy, carboxy, amine, epoxide, amide, -SH,-$SO_3H$, -$COOR^6$, and -$Si(OR^7)_3$, where $R^6$ and $R^7$ are $C_{(1-20)}$ organic radicals.

Radicals included by $R^6$ and $R^7$ are for example, ethyl, methyl, propyl, isopropyl, butyl, t-butyl, pentyl, hexyl, heptyl, 2-ethylhexyl, and octyl. Radicals included by $R^5$, are for example, methylene, ethylene, propylene, isopropylene, butylene, t-butylene, pentylene, hexylene, heptylene, 2-ethylhexylene, and octylene. In instances where the aforementioned $R^5$-$R^7$ radicals can represent more than one radical, these radicals can be the same or different.

There are included within the acrylic acid ester monomers of Formula 1 compounds such as methyl acrylate, isopropyl acrylate, n-propyl acrylate, n-butyl acrylate, isobutyl acrylate, sec-butyl acrylate, 2-ethylhexyl acrylate, etc. Exemplary methacrylic acid ester monomers of Formula 1 include methyl methacrylate, ethyl methacrylate, n-butyl methacrylate, isobutyl methacrylate, hexyl methacrylate, etc. Acrylic ester monomers that are usually considered functional are also included in Formula 1, however, the functional groups must be selected in such a way that they will not react between themselves to form cross-linking within the primer layer.

The polymerization of the monomeric acrylic acid esters and methacrylic acid esters to provide the thermoplastic acrylic polymers useful in the practice of the invention may be accomplished by any of the well known polymerization techniques. The thermoplastic acrylic polymers having a molecular weight of at least about 15,000 and preferably greater than 50,000 are preferred.

Acrylic ester homopolymers derived from acrylic acid ester monomers; methacrylic ester homopolymers derived from methacrylic acid ester monomers; and copolymers derived from two different acrylic acid ester monomers, or two different methacrylic acid ester monomers, or an acrylic acid ester monomer and a methacrylic acid ester monomer are useful in the instant invention. In addition, blends of two or more of the aforedescribed thermoplastic acrylic polymers, e.g., two or more different acrylic ester copolymers, two or more different methacrylic ester copolymers, an acrylic ester homopolymer and a methacrylic ester homopolymer, an acrylic ester copolymer and an methacrylic ester copolymer, and acrylic ester homopolymer and a methacrylic ester copolymer, etc., can also be used in the present invention.

For blending and application, the above acrylics can either be emulsified or dissolved in a liquid carrier system. Suitable liquid carrier systems for use with emulsion borne acrylics contain relatively high weight ratios of water to organic solvent. Too low a such ratio will lead to breakdown of the emulsion with a concomitant coagulation of the the acrylic. Conversely, liquid carrier systems for use with solvent borne acrylics contain relatively low weight ratios of water to organic solvent. At this opposite extreme, too high a such ratio will lead to precipitation with a concomitant coagulation of the acrylic. In the latter case, water may be completely eliminated from the liquid carrier system. Persons skilled in the art of such liquid carrier systems may readily determine proper and desirable ratios of water to organic solvent to obtain suitable acrylic emulsions or solutions.

Organic solvents suitable for use in the above liquid carrier systems are organic liquids which dissolve or swell the thermosettable or thermoplastic acrylics described above but are not so aggressive that they will injure or attack the thermoplastic substrates. Generally, such organic solvents are alcohols, ethers, esters, or ketones. Preferred such organic solvents have hydroxyl groups to lessen their aggressiveness to the substrate. Recommended organic solvents are the alkanols or hydroxy ethers. Recommended hydroxy ethers are represented by the general formula:

$R^1$-O-$R^2$-OH (2)

wherein $R^1$ is an alkyl radical and $R^2$ is an alkylidene radical and preferably, the sum of the carbon atoms present in $R^1$ and $R^2$ is from 3 to about 10. Recommended alkanols preferably contain from 1 to 4 carbon atoms and include methanol, ethanol, isopropanol, t-butanol and the like.

The organopolysiloxanes suitable for use in the hardcoat of the present invention are described in U.S. Pat. Nos. 3,986,997; 3,888,815; 3,701,753; 4,284,685; and 4,308,317. Broadly, these organopolysiloxanes may be described as the solid condensation products of the partial condensates of silanols derived from compounds having the general formula:

$R^3_a SiV_{(4-a)}$ (3)

wherein each $R^3$ is independently a monovalent hydrocarbon radical or a halogenated monovalent hydrocarbon radical, V represents a hydrolyzable group, and a may, on average, vary from 0 to 2. More specifically, each V is independently a member of one or more of the following hydrolyzable groups: halogen, alkoxy, acyloxy and aryloxy.

Preferably, $R^3$ represents an alkyl radical containing from 1 to about 6 carbon atoms such as methyl, ethyl, and propyl through hexyl (both normal and isomeric); an alkenyl radical containing from 2 to about 6 carbon atoms, such as vinyl and propenyl; a phenyl radical; a halogenated alkyl radical containing from 1 to about 6 carbon atoms such as the 3,3,3-trifluoropropyl radical; a glycidoxyalkyl radical containing from 2 to about 6 carbon atoms such as the gamma-glycidoxypropyl radical; or an acrylic ester radical such as the gamma-methacryloxypropyl radical containing from about 4 to about 6 carbon atoms. Preferably, V represents an alkoxy radical containing from 1 to about 6 carbon atoms such as methoxy, ethoxy, propoxy, hexoxy and the like; a phenoxy radical; an acyloxy radical containing from 2 to about 6 carbon atoms such as acetoxy, propanoyloxy, butyroyloxy, pentanoyloxy, hexanoyloxy, and the like; or a benzoyloxy radical.

Especially preferred compounds of Formula 3 are silanes of the formula

$R^3_a Si(OR^4)_{4-a}$ (4)

and silanes of the formula

$R^3_aSi(O\overset{O}{\overset{\|}{C}}R^4)_{4-a}$ (5)

wherein $R^3$ and a are as defined above; and $R^4$ represents monovalent alkyl and phenyl radicals and halogenated monovalent alkyl and phenyl radicals containing from 1 to about 6 carbon atoms.

Upon hydrolysis, the silanes of Formulae 4 and 5 are converted to the corresponding silanols producing as a by-product the corresponding alcohols and acids. Following generation of the silanol, there is a partial condensation of the hydroxyl substituents to form -Si-O-Si-bonding. The condensation is not complete, but rather the organopolysiloxane retains a quantity of residual silicon-bonded hydroxyl groups. This partial condensate can be characterized as a further-curable, i.e., further condensable, siloxanol polymer. Generally, during curing of the further-curable organopolysiloxane these residual hydroxyl groups condense to give a siloxane represented by the formula:

$R^3_aSiO_{(4-a)/2}$ (6)

wherein $R^3$ and a are as defined above.

In preferred embodiments, colloidal silica is present during the hydrolysis of the silanes to silanols and particularly during the subsequent condensation of the silanols to siloxanes. The colloidal silica particles generally have a particle size in the range 5 to 150 millimicrons in diameter. Preferred colloidal silicas contain surface bonded silanols which react during condensation with the liquid silanols of the hardcoat composition to make the colloidal silica particle an integral chemically bonded constituent of the cured hardcoat layer. Generally, colloidal silica is added to the silanol solution prior to condensation in a weight ratio to silanol of from about 1/9 up to about 2/1. Colloidal silica is distinguished from other water dispersable forms of $SiO_2$, such as nonparticulate polysilicic acid or alkali metal silicate solutions, which are not operative in the practice of the present invention.

The most preferred class of further-curable organopolysiloxanes which are employed in the present invention are the hydrolysis and condensation products of trialkoxysilanes or mixtures thereof, i.e. the silanes of Formula 4, wherein $R^4$ is preferably methyl, but may be an alkyl group containing up to three carbon atoms, $R^3$ is at least 70% methyl, and a is 1.

The hydrolysis of the alkyloxy and aryloxy silanes generally requires the addition of an acid catalyst. Suitable acids include both organic and inorganic acids such as hydrochloric, chloroacetic, acetic, citric, benzoic, formic, propionic, maleic, oxalic, glycolic and the like. The acid can be added to either the silane, which hydrolyzes to form the silanol component of the composition, or to the water phase prior to mixing the two compounds.

Thus, the silanol partial condensates used in the present invention as both a primer additive and hard coat are generally prepared by a process wherein the alkyltrialkoxylsilane, aryltrialkoxysilane, or a mixture of alkyltrialkoxysilane and aryltrialkoxysilane is heated in the presence of water wherein the molar ratio of water to total silane is at least about 1.5:1, in the presence of an effective amount of a hydrolysis catalyst such as a mineral acid, for example, hydrochloric acid, and in the presence of colloidal silica. The heat is maintained for about 1 to about 10 hours at a temperature between ambient and reflux to produce a siloxane partial condensation product.

The partial condensate of the silanol is generally dissolved in a solvent system made up of the products of condensation, additional organic solvents, and an optional acid. Of course, depending upon intended use, i.e., as additive to the primer or as hardcoat composition, it may be required to adjust concentration of this solution either upwards or downwards. Concentration may be adjusted upwards by evaporation or downwards by dilution of the hydrolysis and condensation solution.

It is critical to the present invention, that is, to obtain the unexpected degree of weatherability which has been discovered and disclosed herein, that the pH of the silanol partial condensates in solution, upon use, range between about 3.8 and about 5.7. This pH value is prior to the addition, or absent the addition, of the ultraviolet light absorber. If necessary, a dilute base, for example ammonium hydroxide, or a dilute acid, for example acetic acid, may be added to the solution of the silanol partial condensates to adjust pH to and within the desired range.

The alkoxysilane functionalized aromatic UV absorbing compounds for use herein as a UV light absorbing agent have the following general formula:

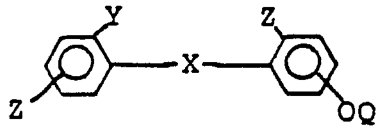

(7)

wherein:
X is

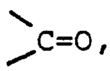

or

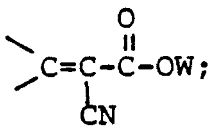

Y is H or OH;
Z is H, OH, OQ or OW, where at least one Z is OH if Y is H;
Q is $-CH_2(CH_2)_nSi(R_2)_x(OR_1)_y$ ; and
W is $C_mH_{2m+1}$; where x is 0, 1 or 2, y = 1, 2 or 3, x + y = 3, $R_1$ = alkyl or alkanoyl having 1 to 6 carbon atoms, $R_2$-alkyl having 1 to 6 carbon atoms, preferably methyl, n = 0, 1 or 2 and m = 1 to 18.

Within the foregoing class, the following compounds are preferred:

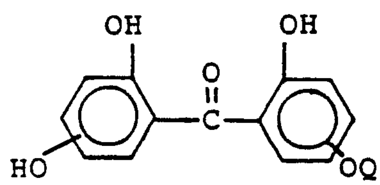

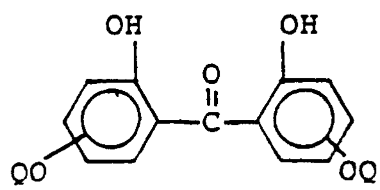

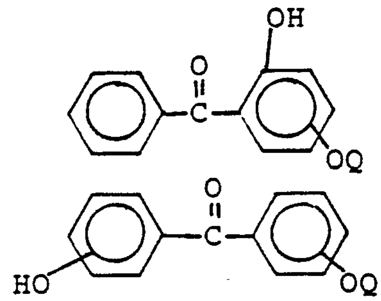

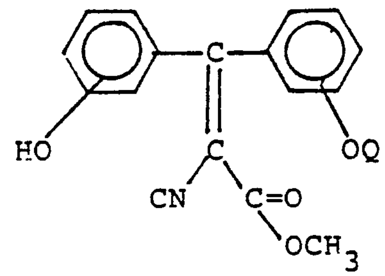

where Q is $-CH_2Si(OCH_3)_3$, $-CH_2SiCH_3(OCH_3)_2$, $-CH_2Si(CH_3)_2(OCH_3)$, $-CH_2(CH_2)_2Si(OCH_3)_3$, $-CH_2(CH_2)_2SiCH_3(OCH_3)_2$, $-CH_2(CH_2)_2Si(OCOCH_3)_3$, $-CH_2(CH_2)_2SiCH_3(OCOCH_3)_2$, $-CH_2(CH_2)_2Si(CH_3)_2-(OCOCH_3)$, $-CH_2CH_2Si(OCH_3)_3$, $-CH2CH_2SiCH_3(OCH_3)_2$, or $-CH_2CH_2Si(CH_3)_2(OCH_3)$. Special mention is made of the compound 4-[gamma-(triethoxysilyl)propoxy]-2-hydroxybenzophenone.

The silylated hydroxybenzophenones are manufactured by methods well known to the art. Specifically, their manufacture is described in U.S. Pat. No. 4,278,804, which is hereby incorporated by reference.

The amount of alkoxysilane functionalized aromatic UV absorbing compound effective to provide the desired level of UV protection in any given situation is well within the capacity of an experienced practitioner to determine. Generally, the amount should be related on either a mole or weight ratio to the amount of organopolysiloxane solids. Herein, it has been found to be advantageous to employ on the order of from about 1 to about 10 parts by weight of the above described UV light absorbing compound for each 100 parts by weight organopolysiloxane solids. Most often, from about 2 to about 8 parts by weight are employed.

Of course, in addition to the alkoxysilane functionalized aromatic UV absorbing compound of the hardcoat, there may be UV light absorbing compounds in the acrylic primer as well. Such compounds are well known in the art and specific examples of such are described in U.S. Pat. No. 3,043,079, which is incorporated herein by reference.

Generally, primer compositions containing the thermosettable acrylics are applied to form a cured primer layer of lesser thickness than primer compositions containing the thermoplastic acrylics. Thus, primer coat compositions containing the thermosettable acrylics are usually less concentrated and less viscous than those primer coat compositions containing the thermoplastic acrylics. Preferably, cured primer layers containing the thermoset acrylics are from about 0.005 mil to about 0.05 mil in thickness and dried primer layers containing the thermoplastic acrylics are from about 0.005 to about 0.10 mils in thickness. A primer layer less than about 0.005 mils or greater than about 0.15 mils in thickness shows marked decrease in adhesion and weatherability. To provide a primer layer which falls within the required thickness ranges, generally requires that the primer compositions contain a weight ratio of solid to liquid carrier ranging from about 1/4 down to about 1/99.

In the method of the present invention, a thin layer of the primer composition is applied onto the thermoplastic substrate by any of the well known methods such as spraying, dipping, roll-coating and the like. The liquid carrier is then evaporated off, as by air drying or mild heating, to leave an even and uniform layer of solids. Subsequently or simultaneously, the primer is generally heated to temperatures ranging between about 90°C to about 165°C for times between 1/4 hour and 72 hours in order to crosslink the acrylic, if thermoset acrylic is present.

The primer compositions of the instant invention may also optionally contain various flatting agents, surface-active agents, stabilizers such as antioxidants, and thixotropic agents. All of these additives and the use thereof are well known in the art and do not require extensive discussion. It is understood that any compounds possessing the ability to function in such a manner, i.e., as a flatting agent, surface-active agent, and stabilizer, can be used provided they do not adversely affect adhesion.

The organopolysiloxane hardcoat on the primed substrate is produced by applying, drying and curing a pH controlled partially condensed silanol solution, including the specified UV screener described above. In those cases where evaporation is employed to concentrate the hardcoat composition, the viscosity of the composition should not exceed the practical useable limits of the method of application chosen and preferably, the viscosity should not exceed 50cS. In those cases where dilution of the further curable organopolysiloxane solution is desired, additional alcohol, water, or a water-miscible solvent may be added. The hardcoat composition is generally applied comprising a solvent system of water, alcohol, and/or acid and other solvents with a concentration of the partially condensed silicone-containing products from about 10% to about 40% by weight. The solvent system should contain at least about 20% by weight alcohol, acid or water-miscible solvent to ensure solubility of the siloxanol formed by the condensation of the silanol.

The hardcoat compositions containing the aforedescribed siloxanes are applied by brushing, dipping, spraying or flowing the partially condensed silanol solution onto the primer layer. The thickness of the hardcoat generally is dependent upon the weight percent further-curable siloxane containing solids in the hardcoat composition. In general, the higher the percent solids and the longer the application time, the greater the thickness of the hardcoat. It is preferred that the cured hardcoat have a thickness of from about 0.05 to about 0.5 mil, more preferably from 0.10 to about 0.4 mil, and most preferably from about 0.15 to about 0.3 mil.

Following application of the hardcoat composition to the primer, the solvent or alcohol by-product and water present in the hardcoat composition is evaporated and the residual further curable organopolysiloxane is cured to form an organopolysiloxane hardcoat. Although certain catalysts may be utilized to accelerate the cure of the further-curable organopolysiloxane, such catalysts are not necessary if the further-curable organopolysiloxane is cured at an elevated temperature for a sufficient length of time. Typically, curing is effected at temperatures ranging from about 90°C to about 165°C for times between about 1/4 hour and 72 hours. Of course, if the glass transition temperature of the thermoplastic substrate is exceeded, then the thermoplastic substrate may become deformed and lose its utility.

Thus, in the manner of the present invention, thermoplastic substrates are provided with a hardcoat which retains excellent adhesion to an acrylic primed thermoplastic substrate, even after prolonged aging and exposure to weathering. In order that those skilled in the art may better understand and more easily practice the present invention, the following examples are given by way of illustration and not by way of limitation.

Tests

Accelerated Weathering Test (AWT)

The sample is placed in an Atlas Electric UVCON accelerated weathering tester set to a cycle of 8 hrs light at 60°C and 4 hours dark at 50°C and generally tested in accordance with the procedure of ASTM-D3359 Method B. Samples which obtain a rating of 5B according to the ASTM standard are placed back into the tester and exposure is continued. Samples which show any flaking or detachment of the squares in the lattice are failed and the reported figure is the number of hours which the sample was exposed before such flaking or detachment of the squares in the lattice was observed.

Ingredients

Silicone Composition A - 112 weight parts a partially condensed silanol of 70 weight parts methyl trimethoxysilane derivative, 30 weight parts colloidal silica, and 12 weight parts a silylated 2,4-dihydroxybenzophenone is suspended or dissolved in 500 weight parts of the condensation by-products and an additional solvent of i-butyl alcohol; the total composition having a pH of about 7.5.

Silicone Composition B -Dow Corning ARC silicone resin (Q96313), 20% silicone solids and pH = 4.9, is generally described in U.S. Patent No. 3,986,997; Clark.

Thermoset Acrylic Emulsion -3 Weight parts HYCAR 237 acrylic emulsion and 3 weight parts HYCAR 256 acrylic emulsion, each a 50/50 weight ratio thermoset acrylic water emulsion manufactured by B.F. Goodrich, are blended with 67 weight parts water and 30 weight parts 2-butoxy ethanol.

Thermoplastic Acrylic Solution -4 Weight parts ELVACITE 2042 resin, polyethylmethacrylate, manufactured by DuPont, and 8 weight parts dihydroxybenzophenone are disolved in 100 weight parts butyl cellosolve.

Examples 1-26

4' x 8' Polycarbonate sheets having a thickness of 1/4" were flow coated with either Thermoset Acrylic Emulsion or Thermoplastic Acrylic Solution, as described above, and oven dried for 1 hour at 260°F to a non-critical thickness of about 0.02 mils. Subsequently, the sheets were flow coated with Silicone Composition A in the case of where the primer was applied from Thermoplastic Acrylic Solution, and Silicone Composition B where the primer was Thermoset Acrylic Emulsion; each Silicone Composition containing the indicated weight percentages of 4-[gamma-(triethoxysilyl)propoxy]-2-hydroxybenzophenone as UV screener, and dried for 1 hour at 260°F. Samples were cut from the coated sheets at varying distances from the top so that a range of hardcoat thicknesses could be obtained. Performance is thickness dependent in UV screener-containing hardcoats. Weight percentage UV screener is based on total silicone composition solids, including colloidal silica.

TABLE I

| EXAMPLE | HARDCOAT THICKNESS | HOURS TO FAILURE: Silicone Composition A 8% UV Screener | HOURS TO FAILURE: Silicone Composition B 8% UV Screener | HOURS TO FAILURE: Silicone Composition B 12% UV Screener |
|---|---|---|---|---|
| 1 | 0.100 | - | 900 | - |
| 2 | 0.105 | 1350 | 450 | - |
| 3 | 0.110 | 1350 | - | - |
| 4 | 0.115 | - | 1500 | - |
| 5 | 0.120 | 1650 | 900 | 1200 |
| 6 | 0.125 | - | 450 | 1500 |
| 7 | 0.130 | - | 900 | 1050 |
| 8 | 0.135 | 1500 | 1050 | 1200 |
| 9 | 0.140 | 1950 | - | - |
| 10 | 0.145 | 2700 | 1350 | 1650 |
| 11 | 0.150 | - | 1500 | 900 |
| 12 | 0.155 | 2750 | 1800 | - |
| 13 | 0.160 | 2850 | - | - |
| 14,15 | 0.165 | 2700/2550 | 1050 | 2100 |
| 16 | 0.170 | - | 1350 | - |
| 17 | 0.175 | - | - | 1500 |
| 18,19 | 0.180 | 3000/3000 | 1650 | - |
| 20 | 0.185 | 3450 | - | 2700 |
| 21 | 0.190 | 3900 | 1950 | 1650 |
| 22 | 0.200 | - | 2250 | 2250 |
| 23 | 0.210 | - | - | 1800 |
| 24 | 0.225 | - | - | 3000 |
| 25 | 0.230 | - | - | 2850 |
| 26 | 0.235 | - | - | 3300 |

## Claims

1. An article comprising an acrylic primed thermoplastic substrate having adhered thereto an organopolysiloxane hardcoat, said hardcoat derived from a further curable siloxanol composition comprising:

(a) partial condensates of silanols derived from compounds having the general formula:
$R^3{}_aSiV_{(4-a)}$
wherein $R^3$ is selected from a monovalent hydrocarbon radical or halogenated monovalent hydrocarbon radical, a may be 0, 1, or 2, and V is independently a member of one or more hydrolyzable groups;

(b) an effective amount of solvent system to permit proper application of the hardcoat wherein said solvent system and said partially condensed silanols have a pH ranging from about 3.8 to about 5.7 absent components (c); and

(c) an effective amount of an alkoxysilane functionalized aromatic UV absorbing compound of the general formula:

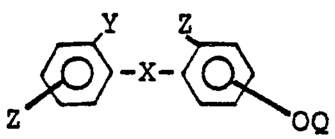

wherein:
X is

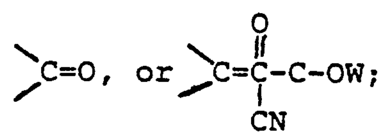

Y is H or OH;
Z is H, OH, OQ or OW, where at least one Z is OH if Y is H;
Q is $-CH_2(CH_2)_nSi(R_2)_x(OR_1)_y$ ; and
W is $C_mH_{2m+1}$; where x is 0, 1 or 2, y = 1, 2 or 3, x + y = 3, $R_1$ = alkyl or alkanoyl having 1 to 6 carbon atoms, $R_2$-alkyl having 1 to 6 carbon atoms, preferably methyl, n = 0, 1 or 2, and m = 1 to 18.

2. The article of Claim 1 wherein said thermoplastic substrate is polycarbonate.

3. The article of Claim 1 which additionally contains colloidal silica chemically bonded to said partial condensates of silanols.

4. The composition of Claim 1 wherein said a is 1 and said $R^3$ is at least 70% by number methyl with the balance selected from the group consisting of an alkyl radical containing from 1 to about 6 carbon atoms, an alkenyl radical containing from 2 to 6 carbon atoms, a phenyl radical, a halogenated alkyl radical containing from 1 to about 6 carbon atoms, a glycidoxyalkyl radical containing from 2 to about 6 carbon atoms, and an acrylic ester radical containing from 4 to about 6 carbon atoms.

5. The article of Claim 1 wherein said alkoxy functionalized aromatic absorbing compound is 4-[-gamma-(triethoxysilyl)propoxy]-2-hydroxybenzophenone.

6. The article of Claim 1 wherein said further curable siloxanol composition comprises from about 1 to about 10 parts by weight said alkoxysilane functionalized UV absorbing compound for each 100 parts by weight organopolysiloxane solids.

7. A method to improve the effectiveness of alkoxysilane functionalized aromatic UV light absorbing compounds in an organopolysiloxane hardcoat situated on an acrylic primed thermoplastic substrate and derived from a further curable siloxanol composition comprising:
(a) partial condensates of silanols derived from compounds having the general formula:
$R^3{}_aSiV_{(4-a)}$
wherein $R^3$ is selected from a monovalent hydrocarbon radical or halogenated monovalent hydrocarbon radical, a may be 0, 1, or 2, and V is independently a member of one or more hydrolyzable groups; and
(b) an effective amount of solvent system to permit proper application of the hardcoat;
which method comprises the step of adjusting the pH of said solvent system and said partially condensed silanols to a value of from about 3.8 to about 5.7 prior to adding said UV light absorbing compound and prior to curing said siloxanol composition on said primed substrate.

8. The method of Claim 7 wherein said adjusting is accomplished by the addition of a dilute base or dilute acid.

9. The method of Claim 8 wherein said dilute base is ammonium hydroxide and said dilute acid is acetic acid.

10. The method of Claim 7 wherein said thermoplastic substrate is polycarbonate.